# FASCICULE DE BREVET EUROPEEN

(11) **EP 3 424 675 B1**
(45) Date de publication et mention de la délivrance du brevet: **22.01.2020**
(21) Numéro de dépôt: 18179537.8
(22) Date de dépôt: 25.06.2018
(51) Int. Cl.: B29C 45/27

(54) **INSTALLATION DE MOULAGE PAR INJECTION**
SPRITZGUSSANLAGE
INJECTION MOULDING INSTALLATION

(30) Priorité: 06.07.2017 FR 1756362
(43) Date de publication de la demande: 09.01.2019
(73) Titulaire: CEMA Technologies, 72100 Le Mans (FR)
(72) Inventeur: BOUILLOUD, Marc, 72200 La Fleche (FR); PERROCHON, Julien, 72000 Le Mans (FR); MARTIN, Emmanuel, 72550 Degre (FR)
(74) Mandataire: Laget, Jean-Loup

(56) Documents cités:
- EP-A1- 1 938 945
- DE-U1-212015 000 095
- US-A1- 2009 269 430
- US-A1- 2010 092 602

## Description

### DOMAINE DE L'INVENTION

L'invention concerne une installation de moulage par injection, notamment par injection latérale.

Dans les installations de moulage de matière plastique, la matière plastique est fondue, acheminée à l'état liquide à des pointes d'injection et injectée dans les cavités moulantes. Après solidification dans les cavités moulantes, les pièces moulées sont extraites et libérées pour leur utilisation.

### ART ANTERIEUR

La technique de moulage par injection, notamment par injection latérale est connue, ainsi que ses difficultés liées en grande partie à la température. En effet, pour acheminer aux pointes d'injection une matière plastique fluide, l'ensemble distributeur, ou bloc répartiteur, doit être à une température de l'ordre de 200 à 400°C, alors que les cavités moulantes sont à la température ambiante de l'outillage.

A la mise en service de l'installation de moulage, le bloc répartiteur doit être chauffé à la température de fonctionnement, ce qui correspond pour lui à des modifications de dimensions. Le bloc répartiteur étant constitué de plusieurs pièces pour assurer l'acheminement de la matière plastique fluide, certaines de ces pièces ont des mouvements relatifs.

Pour que la qualité du moulage soit homogène, il faut que l'écoulement de la matière plastique fluide dans les canaux à l'intérieur du bloc répartiteur ne soit pas perturbé par des décalages relatifs des canaux entre deux pièces. Il faut aussi qu'il n'y ait pas de décalage entre la pointe d'injection et le seuil d'injection de la cavité moulante.

Le document WO 2012/115614 décrit une installation de moulage par injection dans laquelle les pointes d'injection sont sollicitées par des rondelles de ressort pour pouvoir se déplacer par rapport au seuil d'injection en fonction des dilatations du bloc répartiteur.

Le document EP 3 025 841 décrit une installation de moulage par injection dans laquelle les pointes d'injection sont imbriquées dans la paroi de la cavité moulante, et des moyens de pression les maintiennent dans l'axe des seuils d'injection.

Le document WO 2014/032165 décrit une installation de moulage par injection dans laquelle les pointes d'injection sont insérées dans la paroi des cavités moulantes pour leur maintien devant les seuils d'injection.

Le document US 2009/0269 430 décrit une installation de moulage par injection latérale, avec buse axiale d'alimentation en matière plastique fluide et bloc répartiteur à faces latérales alimentant plusieurs pointes d'injection en appui sur une face latérale du bloc répartiteur.

Le document US 2010/0092 602 décrit une installation de moulage par injection latérale, avec buse axiale d'alimentation en matière plastique fluide et bloc répartiteur alimentant plusieurs pointes d'injection.

Dans les documents de l'art antérieur, les pointes d'injection sont alignées avec les seuils d'injection des cavités moulantes et la difficulté vient du respect de cet alignement lors des variations de dimensions du bloc répartiteur liées aux variations de température.

Un autre problème technique qui se pose est lié au temps d'immobilisation de l'installation de moulage en cas de changement de la matière plastique utilisée pour le moulage ou de maintenance des systèmes d'alimentation en matière plastique. Dans tous les documents de l'art antérieur, il est nécessaire de procéder à un démontage assez conséquent et à un remontage assez long.

### BUT ET RESUME

L'un des buts de la présente invention est de proposer une installation de moulage par injection latérale qui évite les inconvénients précités.

Un autre but de l'invention est de proposer une installation de moulage par injection latérale dans laquelle la distance entre la pointe d'injection et le seuil d'injection reste fixe.

L'invention a pour objet une installation de moulage par injection latérale comportant une partie centrale avec buse axiale d'alimentation en matière plastique fluide, et bloc répartiteur à faces latérales alimentant chacune plusieurs pointes d'injection, dans laquelle chaque pointe d'injection est logée dans un ensemble de support de pointe qui porte une cavité moulante, la pointe d'injection étant en appui sur une face latérale du bloc répartiteur, en position d'accostage, et l'ensemble de support de pointe comporte un alésage de guidage et de maintien de la pointe d'injection, caractérisé en ce que l'alésage a une ouverture qui se prolonge partiellement par un méplat, et la pointe d'injection comporte une embase cylindrique, d'appui sur l'ouverture de l'alésage, présentant un pan coupé pour assurer avec le méplat l'orientation correcte de la pointe d'injection dans l'alésage.

Avantageusement, la pointe d'injection comporte une tête munie d'un alésage aboutissant à un orifice de l'ensemble de support de pointe jouant le rôle de seuil d'injection pour la cavité moulante.

De manière avantageuse, l'ensemble de support de pointe et la tête de la pointe d'injection comportent des alésages coaxiaux pour le passage d'un obturateur du seuil d'injection.

De préférence, la pointe d'injection comporte un alésage axial pour le passage de la matière plastique fluide entre le bloc répartiteur et la tête de la pointe d'injection.

Avantageusement, l'alésage axial de la pointe d'injection et la canalisation correspondante présentent chacun un élargissement en vis-à-vis.

De préférence l'alésage axial de la pointe d'injection présente, à son extrémité proche de la tête, une restriction.

Avantageusement, la restriction est constituée par un profil cylindrique de longueur comprise entre 0,5 mm et 3 mm et de diamètre compris entre 0,3 mm et 1 mm.

Selon un mode de réalisation, la pointe d'injection comporte une restriction à proximité immédiate du seuil d'injection, et assure une injection latérale directe dans une cavité de moulage.

### BREVE DESCRIPTION DES FIGURES

L'invention est décrite ci-après avec référence aux dessins annexés dans lesquels.
La Figure 1 est une vue simplifiée en coupe axiale d'un exemple de réalisation de la partie centrale d'une installation de moulage par injection latérale selon l'invention.
La Figure 2 est une vue simplifiée de dessus d'un exemple de réalisation d'un bloc répartiteur et de pointes d'injection selon l'invention.
La Figure 3 est une en perspective d'un module contenant une pointe d'injection selon un exemple de réalisation de l'invention.
La Figure 4 est une vue en coupe du module de la Figure 3.
La Figure 5 est une vue analogue à la Figure 3 avec une pointe d'injection munie d'une restriction de l'alésage axial.
La Figure 6 est une vue analogue à la Figure 5 dans le cas d'une injection latérale directe.

### DESCRIPTION DETAILLEE

L'installation de moulage comprend une partie centrale 1 et une armature extérieure (non représentée) assurant la tenue mécanique de l'installation et le chauffage de la matière plastique et des canalisations pour l'amener à l'état fluide jusqu'au bloc répartiteur 2. La partie centrale 1 reçoit une buse axiale 3, le bloc répartiteur 2, et des ensembles de support de pointe 4-28 contenant les pointes d'injection 5 et portant les cavités moulantes 6.

Selon un mode de réalisation de l'invention, le bloc répartiteur 2 est en une seule pièce en forme de parallélépipède rectangle, à base carrée et de hauteur faible par rapport à sa base. Sur chacune de ses quatre faces latérales 7 sensiblement identiques, sont disposés quatre ensembles de support de pointe 4-28 contenant chacun une pointe d'injection 5 d'axe horizontal. Chacune de ces pointes d'injection 5 alimente une cavité moulante 6 disposée par exemple verticalement au-dessus de la pointe d'injection.

Le rôle du bloc répartiteur 2 est d'alimenter en matière plastique fluide les seize pointes d'injection 5 simultanément. A cet effet, la buse chaude 3 est disposée axialement pour alimenter le bloc répartiteur 2 dans son axe géométrique, par une canalisation axiale 8. Cette canalisation axiale 8 se divise en deux canalisations radiales 9, alignées sur une diagonale du bloc répartiteur 2 et alimentant chacune huit pointes d'injection 5 disposées sur deux faces 7 adjacentes du bloc répartiteur 2. Une canalisation 9 se divise en deux canalisations 10, alimentant chacune les quatre pointes d'injection 5 d'une face 7 du bloc répartiteur 2. Une canalisation 10 se divise en deux canalisations 11, alimentant chacune deux pointes d'injection adjacentes de la face du bloc répartiteur 2. Une canalisation 11 se divise en deux canalisations 12 alimentant chacune une pointe d'injection 5. Les canalisations étant disposées en respectant chaque fois la règle de symétrie, toutes les seize pointes d'injection sont alimentées simultanément à partir de la buse chaude axiale 3 avec le minimum de distance parcourue et un équilibrage naturel par équidistance des sorties du bloc répartiteur 2 par rapport à la canalisation axiale 8 d'alimentation.

Par ailleurs, les canalisations 8 à 12 sont dimensionnées pour que le temps de stagnation de la matière plastique fluide dans ces canalisations soit minimal. A cet effet, la géométrie des canaux est réalisée avec des arrondis pour éviter les zones mortes et augmenter la vitesse de circulation de la matière plastique fluide.

Selon une disposition particulière à l'invention, les pointes d'injection 5, sensiblement coplanaires sont placées en appui sur les faces latérales 7 du bloc répartiteur 2, en position d'accostage.

Les ensembles de support de pointe 4-28 ont une double fonction. Ils servent de réceptacle pour les pointes d'injection 5, et de support pour les cavités moulantes 6. Chaque ensemble de support de pointe 4-28 est constitué d'un support 4 de cavité moulante 6 accueillant l'extrémité de la pointe d'injection 5 et d'une pièce intermédiaire 28 pour le maintien en position de la pointe d'injection 5. Cette pièce intermédiaire 28 faiblement conductrice de la chaleur assure le support mécanique de la pointe d'injection et son isolation thermique. La pièce intermédiaire 28 est calée en position par rapport à l'ensemble de support de pointe 4-28. L'ensemble de support de pointe 4-28 comporte un alésage 13, horizontal sur le dessin dans lequel est guidée et maintenue une pointe d'injection 5. L'alésage 13 est limité, d'une part par un fond 14, d'autre part par une ouverture 15 qui se prolonge partiellement par un méplat 16. Au voisinage du fond 14, l'ensemble de support de pointe 4-28 est traversé verticalement par un alésage 17 dont l'axe aboutit à un orifice 18 de la face supérieure de l'ensemble de support de pointe 4-28. Cet orifice 18 joue le rôle de seuil d'injection pour la cavité moulante 6 placée au-dessus l'ensemble de support de pointe 4-28. Les alésages 13 et 17 sont sensiblement orthogonaux.

La pointe d'injection 5 comporte une embase cylindrique débordante 20, présentant un pan coupé 19 destiné à s'appliquer sur le méplat 16 pour assurer l'orientation correcte de la pointe d'injection 5. L'embase cylindrique 20 est en appui sur l'ouverture 15 pour assurer le positionnement axial correct de la pointe d'injection 5 dans l'alésage 13. Au-delà de son embase 20, la pointe d'injection 5 comporte une partie cylindrique 21 coulissant dans l'alésage 13, puis une partie cylindrique 22 de diamètre moindre, et enfin une tête 23.

En cas d'obturation, la tête 23 comporte un alésage 24 coaxial à l'alésage 17 de l'ensemble de support de pointe 4-28, et aboutissant à l'orifice 18 jouant le rôle de seuil d'injection. Les deux alésages 17 et 24 sont prévus pour le passage d'un obturateur, non représenté, du seuil d'injection. La pointe d'injection 5 comporte un alésage axial 25 assurant le passage de la matière plastique fluide entre le bloc répartiteur 2 et l'alésage 24 de la tête 23.

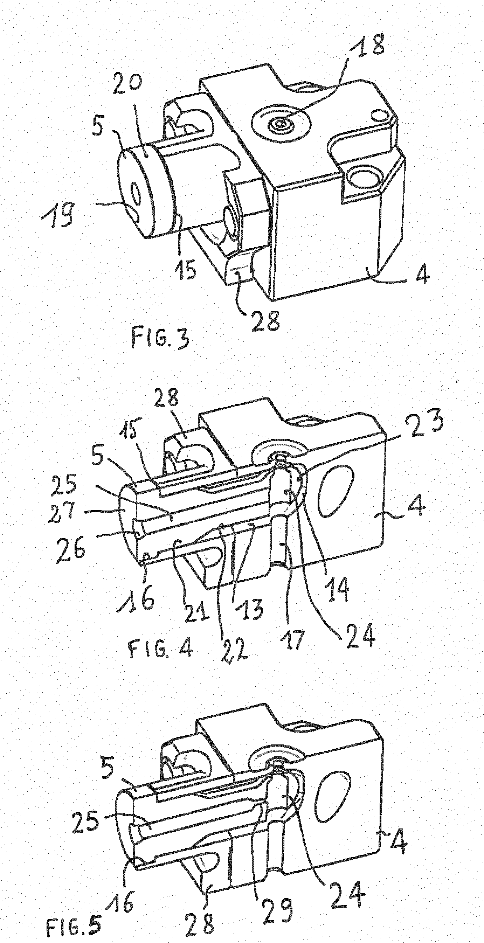

Selon une variante de réalisation (Figure 5) l'alésage axial 25 de la pointe d'injection 5 présente, à son extrémité proche de la tête 23, une restriction 29. Cette restriction 29 est constituée par un profil cylindrique de longueur comprise entre 0,5 mm et 3 mm, et de diamètre compris entre 0,3 mm et 1 mm. Ce profil débouche dans l'alésage 24 recevant l'obturateur. L'étroitesse relative du profil cylindrique amplifie pendant l'injection le phénomène de dissipation visqueuse avec élévation corrélative de température. Il en résulte une économie globale d'énergie de chauffage de la matière plastique, et des conditions de fonctionnement moins sévères.

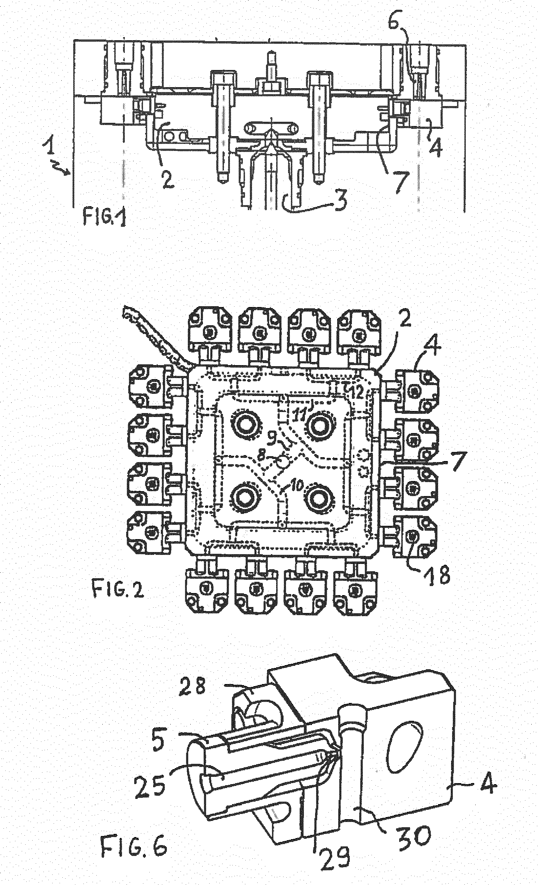

Dans l'exemple de réalisation de la Figure 6, la pointe d'injection 5 comporte la restriction 29 à proximité immédiate du seuil d'injection, et elle assure une injection latérale directe dans une cavité moulante 30.

Avantageusement, l'alésage axial 25 de la pointe d'injection 5 présente un élargissement 26 à son entrée au voisinage de la face plane 27 radiale de la pointe d'injection 5. De manière analogue, au voisinage de la face latérale 7 du bloc répartiteur 2, la canalisation 12 correspondante présente un élargissement. Ainsi, lorsque la face plane 27 de la pointe d'injection 5 est appliquée sur la face latérale plane 7 du bloc répartiteur 2, les deux élargissements en vis-à-vis l'un de l'autre assurent le libre passage sans restriction de la matière plastique fluide même si l'alésage axial 25 n'est pas rigoureusement coaxial à la canalisation 12. Grâce à cette disposition, et au fait que, dans l'ensemble de support de pointe 4-28, la pointe d'injection est solidaire de la cavité moulante 6, c'est-à-dire de la partie de l'empreinte du côté injection, il n'y a pas de liaison rigide entre l'ensemble de support de pointe 4-28 et le bloc répartiteur 2, mais une possibilité d'accostage avec glissement relatif entre l'ensemble de support de pointe 4-28 et le bloc répartiteur 2 sans conséquence pour la qualité de l'empreinte.

En l'absence de moulage, avec un bloc répartiteur froid, les ensembles de support de pointe 4-28 peuvent être facilement retirés et les pointes d'injection 5 peuvent être librement retirées pour nettoyage ou remplacement. Ainsi la maintenance des systèmes d'injection ou le basculement vers une nouvelle couleur de matière plastique sont facilités.

## Revendications

1. Installation de moulage par injection latérale comportant une partie centrale (1) avec buse axiale (3) d'alimentation en matière plastique fluide, et bloc répartiteur (2) à faces latérales (7) alimentant chacune plusieurs pointes d'injection (5), dans laquelle chaque pointe d'injection (5) est logée dans un ensemble de support de pointe (4-28) qui porte une cavité moulante (6), la pointe d'injection étant en appui sur une face latérale (7) du bloc répartiteur (2), en position d'accostage, et l'ensemble de support de pointe (4-28) comporte un alésage (13) de guidage et de maintien de la pointe d'injection (5), **caractérisée en ce que** l'alésage (13) a une ouverture (15) qui se prolonge partiellement par un méplat (16), et la pointe d'injection (5) comporte une embase cylindrique (20), d'appui sur l'ouverture (15) de l'alésage (13), présentant un pan coupé (19) pour assurer avec le méplat (16) l'orientation correcte de la pointe d'injection (5) dans l'alésage (13).

2. Installation de moulage selon la revendication 1, **caractérisée en ce que** la pointe d'injection (5) comporte une tête (23) munie d'un alésage (24) aboutissant à un orifice (18) de l'ensemble de support de pointe (4-28) jouant le rôle de seuil d'injection pour la cavité moulante (6).

3. Installation de moulage selon la revendication 2, **caractérisée en ce que** l'ensemble de support de pointe (4-28) et la tête (23) de la pointe d'injection (5) comportent des alésages (17 et 24, respectivement) coaxiaux pour le passage d'un obturateur du seuil d'injection.

4. Installation de moulage selon la revendication 1, **caractérisée en ce que** la pointe d'injection (5) comporte un alésage axial (25) pour le passage de la matière plastique fluide entre le bloc répartiteur (2) et la tête (23) de la pointe d'injection (5).

5. Installation de moulage selon la revendication 4, **caractérisée en ce que** l'alésage axial (25) de la pointe d'injection (5) et la canalisation correspondante (12) présentent chacun un élargissement en vis-à-vis.

6. Installation de moulage selon la revendication 4, **caractérisée en ce que** l'alésage axial (25) de la pointe d'injection (5) présente à son extrémité proche de la tête (23), une restriction (29).

7. Installation de moulage selon la revendication 6, **caractérisée en ce que** la restriction (29) est constitué par un profil cylindrique de longueur comprise entre 0,5 mm et 3 mm, et de diamètre compris entre 0,3 mm et 1 mm.

8. Installation de moulage selon la revendication 6, **caractérisée en ce que** la pointe d'injection (5) comporte une restriction (29) à proximité immédiate du seuil d'injection, et assure une injection latérale directe dans une cavité de moulage (30).

## Patentansprüche

1. Seitliche Spritzgussanlage, umfassend einen zentralen Teil (1) mit einer axialen Düse (3) zur Versorgung mit flüssigem Plastikmaterial, und Verteilerblock (2) mit seitlichen Flächen (7), der jeden von mehreren Spritzpunkten (5) versorgt, wobei jeder Spritzpunkt (5) in einer Punkthalteeinheit (4 - 28) aufgenommen ist, die einen Formhohlraum (6) trägt, wobei der Spritzpunkt auf einer seitlichen Fläche (7) des Verteilerblocks (2) in anliegender Position aufliegt und die Punkthalteeinheit (4 - 28) eine Bohrung (13) zur Führung und zum Halten des Spritzpunkts (5) umfasst, **dadurch gekennzeichnet, dass** die Bohrung (13) eine Öffnung (15) umfasst, die teilweise durch eine Abflachung (16) verlängert ist, und der Spritzpunkt (5) einen zylindrischen Sockel (20) zur Auflage auf der Öffnung (15) der Bohrung (13) umfasst, aufweisend einen abgestumpften Winkel (19), um mit der Abflachung (16) die korrekte Ausrichtung des Spritzpunkts (5) in der Bohrung(13) sicherzustellen.

2. Gussanlage nach Anspruch 1, **dadurch gekennzeichnet, dass** der Spritzpunkt (5) einen Kopf (23) umfasst, der mit einer Bohrung (24) ausgestattet ist, die in eine Mündung (18) der Punkthalteeinheit (4 - 28) führt, die die Rolle der Spritzquelle für den Formhohlraum (6) spielt.

3. Gussanlage nach Anspruch 2, **dadurch gekennzeichnet, dass** die Punkthalteeinheit (4 - 28) und der Kopf (23) des Spritzpunkts (5) koaxiale Bohrungen (17 bzw. 24) für den Durchgang eines Verschlusses der Spritzschwelle umfasst.

4. Gussanlage nach Anspruch 1, **dadurch gekennzeichnet, dass** der Spritzpunkt (5) eine axiale Bohrung (25) für den Durchgang des flüssigen Plastikmaterials zwischen dem Verteilerblock (2) und dem Kopf (23) des Spritzpunkts (5) umfasst.

5. Gussanlage nach Anspruch 4, **dadurch gekennzeichnet, dass** die axiale Bohrung (25) des Spritzpunkts (5) und der entsprechende Kanal (12) jeweils eine gegenüberliegende Erweiterung aufweisen.

6. Gussanlage nach Anspruch 4, **dadurch gekennzeichnet, dass** die axiale Bohrung (25) des Spritzpunkts (5) an ihrem Ende nahe des Kopfs (23) eine Verengung (29) umfasst.

7. Gussanlage nach Anspruch 6, **dadurch gekennzeichnet, dass** die Verengung (29) aus einem zylindrischen Profil mit einer Länge im Bereich zwischen 0,5 mm und 3 mm und einem Durchmesser im Bereich zwischen 0,3 mm und 1 mm besteht.

8. Gussanlage nach Anspruch 6, **dadurch gekennzeichnet, dass** der Spritzpunkt (5) eine Verengung (29) in unmittelbarer Nähe der Spritzschwelle umfasst und ein direktes seitliches Spritzen in einen Formhohlraum (30) sicherstellt.

## Claims

1. A lateral injection molding installation including a central part (1) with axial nozzle (3) for supplying fluid plastic material, and a distribution block (2) with side faces (7) each supplying several injection tips (5), in which each injection tip (5) is housed in a tip support assembly (4-28) that supports a molding cavity (6), the injection tip bearing on a side face (7) of the distribution block (2), in the docking position, and the tip support assembly (4-28) includes a bore (13) for guiding and holding the injection tip (5), **characterized in that** the bore (13) has an opening (15) that extends partially by a flat (16), and the injection tip (5) includes a cylindrical base (20), bearing on the opening (15) of the bore (13), having a cutaway (19) for ensuring, with the flat (16), the correct orientation of the injection tip (5) in the bore (13).

2. The molding installation according to claim 1, **characterized in that** the injection tip (5) includes a head (23) provided with a bore (24) leading to an orifice (18) of the tip support assembly (4-28) acting as injection threshold for the molding cavity (6).

3. The molding installation according to claim 2, **characterized in that** the tip support assembly (4-28) and the head (23) of the injection tip (5) include coaxial bores (17 and 24, respectively) for the passage of a closing member of the injection threshold.

4. The molding installation according to claim 1, **characterized in that** the injection tip (5) includes an axial bore (25) for the passage of the fluid plastic material between the distribution block (2) and the head (23) of the injection tip (5).

5. The molding installation according to claim 4, **characterized in that** the axial bore (25) of the injection tip (5) and the corresponding channel (12) each have an opposite widening.

6. The molding installation according to claim 4, **characterized in that** the axial bore (25) of the injection tip (5) has, at its end close to the head (23), a restriction (29).

7. The molding installation according to claim 6, **characterized in that** the restriction (29) is made up of a cylindrical profile with a length between 0.5 mm and 3 mm, and a diameter between 0.3 mm and 1 mm.

8. The molding installation according to claim 6, **characterized in that** the injection tip (5) includes a restriction (29) in the immediate vicinity of the injection threshold, and ensures a direct lateral injection into a molding cavity (30).
